(19) Europäisches Patentamt
European Patent Office
Office européen des brevets

(11) **EP 2 951 618 B1**

(12) **EUROPEAN PATENT SPECIFICATION**

(45) Date of publication and mention
of the grant of the patent:
**29.08.2018 Bulletin 2018/35**

(51) Int Cl.:
***G01V 1/28*** *(2006.01)*      ***G01V 1/30*** *(2006.01)*

(21) Application number: **14746018.2**

(22) Date of filing: **30.01.2014**

(86) International application number:
**PCT/US2014/013866**

(87) International publication number:
**WO 2014/120932 (07.08.2014 Gazette 2014/32)**

(54) **COMPUTING ROTATION DATA USING A GRADIENT OF TRANSLATIONAL DATA**

BERECHNUNG VON ROTATIONSDATEN UNTER VERWENDUNG EINES GRADIENTEN TRANSLATIONALER DATEN

CALCUL DE DONNÉES DE ROTATION À L'AIDE D'UN GRADIENT DE DONNÉES DE TRANSLATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.02.2013 US 201361759466 P**
**17.01.2014 US 201414158115**

(43) Date of publication of application:
**09.12.2015 Bulletin 2015/50**

(60) Divisional application:
**15177756.2 / 2 960 679**

(73) Proprietors:
• **Westerngeco LLC**
**Houston, Texas 77042 (US)**
Designated Contracting States:
**IS**
• **WesternGeco Seismic Holdings Limited**
**Road Town**
**Tortola (VG)**

(72) Inventors:
• **GOUJON, Nicolas**
**N-1372 Asker (GB)**
• **EDME, Pascal**
**Cambridge**
**Cambridgeshire CB3 0EL (NO)**
• **KASHUBIN, Artem**
**East Grinstead**
**Sussex RH19 2AL (GB)**
• **MIUJZERT, Everhard Johan**
**N-1372 Asker (GB)**

(74) Representative: **Schlumberger Intellectual Property Department**
**Parkstraat 83**
**2514 JG Den Haag (NL)**

(56) References cited:
WO-A1-2012/015520    KR-A- 20110 042 276
US-A1- 2009 296 529    US-A1- 2010 225 324
US-A1- 2012 253 683    US-A1- 2012 253 683
US-A1- 2012 269 033    US-B2- 6 814 179

• **NGUYEN DINH PHAM ET AL: "Investigation of ground rotational motions caused by direct and scattered P-waves from the 4 March 2008 TAIGER explosion experiment", JOURNAL OF SEISMOLOGY, KLUWER ACADEMIC PUBLISHERS, DO, vol. 16, no. 4, 4 April 2012 (2012-04-04), pages 709-720, XP035106873, ISSN: 1573-157X, DOI: 10.1007/S10950-012-9300-0**

**Description**

BACKGROUND

Seismic surveying is used for identifying subterranean elements of interest, such as hydrocarbon reservoirs, freshwater aquifers, gas injection zones, and so forth. In seismic surveying, seismic sources are activated to generate seismic waves directed into a subterranean structure.

The seismic waves generated by a seismic source travel into the subterranean structure, with a portion of the seismic waves reflected back to the surface for receipt by seismic sensors (e.g., geophones, accelerometers, etc.). These seismic sensors produce signals that represent detected seismic waves. Signals from the seismic sensors are processed to yield information about the content and characteristics of the subterranean structure.

A land-based seismic survey arrangement can include a deployment of an array of seismic sensors on the ground. A marine survey arrangement can include placing a seabed cable or other arrangement of seismic sensors on the seafloor.

Nguyen Dinh Pham et al, "Investigation of Ground Rotational Motions Caused by Direct and Scattered P-Waves from the 4 March 2008 Taiger Explosion Experiment," J. Seismol., pages 709-720 (2012), refers to possible applications of combined measurements of artificial explosion-derived translational and rotational motions, which involves analyzing rotational motion observations and array-recorded translational motions.

KR 20110042276 refers to use of a multi-axis, multi-function MEMS sensor for use in a small cylindrical housing inside a sensor body.

SUMMARY

According to claim 1, translational data in a first direction is measured by particle motion sensors contained in an elongated housing of a sensor device provided at an earth surface. The particle motion sensors are spaced apart along a second, different direction along a longitudinal axis of the elongated housing. Rotation data around a third direction is computed based at least in part on computing a gradient of the translational data with respect to the second direction.

Other features will become apparent from the following description, from the drawings, and from the claims.

BRIEF DESCRIPTION OF THE DRAWINGS

Some embodiments are described with respect to the following figures.

Fig. 1 is a schematic diagram of a sensor device according to some implementations.

Figs. 2A-2C are schematic diagrams of a sensor device according to various implementations.

Fig. 3 is a schematic diagram of a sensor device partially buried in a hole, according to some implementations.

Fig. 4 is a schematic diagram of a sensor device according to further implementations.

Fig. 5 is a flow diagram of a process according to some implementations.

Fig. 6 is a schematic diagram of an example survey arrangement including sensor devices according to some implementations.

DETAILED DESCRIPTION

In seismic surveying (marine or land-based seismic surveying), seismic sensors are used to measure seismic data, such as displacement, velocity, or acceleration. Seismic sensors can include geophones, accelerometers, microelectromechanical systems (MEMS) sensors, or any other type of sensors that measure translational motion of the surface in one or more directions. In the ensuing discussion, a seismic sensor that measures translational motion is referred to as a particle motion sensor. A particle motion sensor can refer to any of the sensors listed above.

An arrangement of particle motion sensors can be provided at (or proximate) a ground surface or earth surface to measure seismic waves reflected from a subterranean structure, in response to seismic waves (or impulses) produced by one or more seismic sources and propagated into an earth subsurface. As described herein a ground surface and/or earth surface is any land surface or bottom surface of a body of water, such as a seafloor, lake floor or wetland. A particle motion sensor provided at a ground surface can refer to a particle motion sensor that is placed in contact with the ground surface, partially buried in the ground surface, or completely buried in the ground surface up to a predetermined depth (*e.g.,* up to a depth of less than 5 meters). A particle motion sensor at (or proximate) the earth surface can record the vectorial part of an elastic wavefield just below the free surface (*i.e.,* ground surface).

In addition to measuring translational data, it may be useful to obtain rotation data when performing survey data acquisition for various purposes. For example, rotation data can be combined with translational data measured by particle motion sensors to eliminate or attenuate noise from the measured translational data. Examples of noise include ground-roll noise or another type of noise (such as ambient noise) that can travel along the earth's surface. Ground-roll noise can be produced by a seismic source or other source, such as cars, engines, pumps, and natural phenomena such as wind and ocean waves. The ground-roll noise travels generally horizontally along an earth surface towards seismic receivers. The horizontally traveling seismic waves, such as Rayleigh waves or Love waves, are undesirable components that can contaminate seismic survey data.

Although reference is made to using rotation data to attenuate noise, it is noted that rotation data can be used for other purposes, whether in the context of a land-based survey acquisition or marine-based survey acquisition in which a seabed cable or other arrangement of seismic sensors is placed on the seafloor. For example, rotation data and translational data can be used in performing various seismic data processing algorithms, including, among others, wavefield interpolation, wavefield extrapolation, wavefield reconstruction, wavefield regularization, P- and S-wave separation, apparent velocity estimation, near-surface characterization, seismic sensor calibration, and seismic imaging.

Wavefield interpolation refers to estimating (interpolating) wavefields at locations where seismic sensors are not provided. P- and S-wave separation refers to separating compressional (P) waves from shear (S) waves in measured seismic survey data. Apparent velocity estimation refers to estimating a characteristic of the seismic wavefield known as ray parameter or horizontal slowness, from which seismic wave velocities at various points in a subterranean structure can be retrieved. Near-surface characterization refers to estimating the shallow earth elastic properties. Seismic sensor calibration refers to calibrating a seismic sensor to compensate for any non-ideal characteristic of the seismic sensor.

Rotation data refers to a rate of rotation (or change in rotation over time) about a specific axis, such as about the $x$ axis (which can also be referred to as a horizontal inline axis) and/or about the $y$ axis (which can also be referred to as a horizontal crossline axis). In accordance with some implementations, rotation data can be derived based on translational data measured by particle motion sensors. In this way, a separate rotational sensor would not have to be provided in survey equipment for the purpose of measuring rotation data.

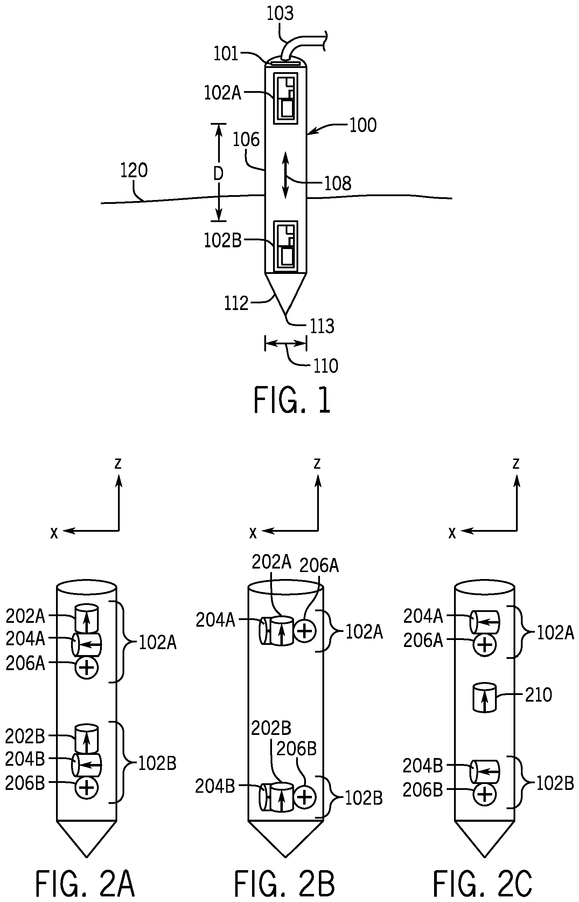

Fig. 1 depicts an example seismic sensor device 100 that includes a first sensor component 102A and a second sensor component 102B. The sensor components 102A and 102B are included inside a single housing 106 of the sensor device 100. The seismic sensor device 100 can also include a power source, such as a battery, a solar cell, and so forth. In manufacturing the seismic sensor device 100, the housing 106 can be sealed to protect the sensor components 102A and 102B.

The housing 106 generally has an elongated shape that allows the sensor components 102A and 102B to be spaced apart along a longitudinal axis 108, by a distance D, of the sensor device 100. In some implementations, the sensor components 102A and 102B are co-axial along the longitudinal axis of the housing 106. The elongated housing 106 can be in the form of a hollow tube, stick, or other elongated structure. The longitudinal axis 108 is the axis along a dimension of the sensor device 100 which is longer than other dimensions of the sensor device 100, such as a width dimension 110 or a depth dimension (not shown) that corresponds to a thickness of the housing 106.

The sensor device 100 having the elongated housing 106 can be referred to as a spike-shaped sensor device.

The housing 106 can be made out of a material, such as plastic, metal, and so forth. According to an example embodiment, the housing 106 may not resonate within a bandwidth of interest for target signals to be measured. In some examples, the bandwidth of interest can be in the range between 1 to 250 Hertz (Hz). In other examples, the housing 106 may exhibit resonance; in such examples, the resonance can be removed by processing, or the resonance can be compensated for by processing.

By arranging the sensor components 102A and 102B in the elongated housing 106 as shown in Fig. 1, the sensor components 102A and 102B are spaced apart along just the longitudinal axis 108. In other words, in some implementations, the sensor device 100 does not include sensor components that are spaced apart in any other direction (other than a direction parallel to the longitudinal axis).

Fig. 1 shows a portion of the sensor device 100 (not to scale) being below the ground surface 120, and a portion of the sensor device 100 being above the ground surface 120. According to an embodiment, the configuration can include a sensor 102B below the ground surface and a sensor 102A above the ground surface. A sensor can also be positioned at or proximate the ground surface 120. According to an embodiment, a majority of the sensor device 100 can be below the ground surface 120. According to another embodiment a majority of the sensor device 100 can be above the ground surface 120. Another embodiment can have approximately half the sensor device 100 above and half the sensor device 100 below the ground surface 120. Another embodiment can have all of the sensor devices 100 (or essentially all the sensor devices 100) below the ground surface 120.

In some examples, to obtain rotation data with respect to a horizontal axis at a ground surface 120, two vertically spaced horizontal orientated particle motion sensors can be provided in the sensor device 100. The sensor device 100 can then be vertically arranged at or near the ground surface 120. It should be understood that additional sensors to 102A and 102B can be located along the length of the sensor device 100 to provide redundancy for failed sensors and/or additional measurements.

The sensor device 100 can include a communication interface circuit 101, which is connected to a communications medium 103 (*e.g.,* electrical cable, fiber optic cable, etc.,). The communications medium 103 can be a wireless medium over which data can be communicated. The communication interface circuit 101 is connected to the sensor components 102A and 102B. Data acquired by the sensor components 102A and 102B are transferred to the communication interface circuit 101, which in turn transmits the acquired data over the communications medium 103 to a remote station, which can be a recording station, a computer, and so forth. According to other embodiments, a memory can be provided and incorporated with the sensor device 100. The memory can also be separate from the sensor device 100 and connected by wire, or short range wireless technology such as Wi-Fi or Bluetooth. An arrangement where memory is included can be referred to in the commercial art as a "blind" node arrangement. In this "blind" node arrangement, a communications interface circuit 101 may not have to be present. It should also be appreciated that a combination of a "blind" node arrangement and a wired node and/or a wireless node arrangement can be used.

In further implementations, the sensor device 100 may contain a sensing element (or sensing elements) to measure a tilt and/or an azimuth of the sensor device 100, where tilt is measured with respect to the z axis. This sensing element(s) can be part of the sensor components 102A and 102B that measure translation and rotation. For example, if the sensor components 102A and 102B include MEMS accelerometers that measure down to DC, then the MEMS accelerometers can provide tilt data. If the sensor components 102A and 102B include geophones, then a tilt meter can be added. An azimuth sensor (e.g., magnetometer, compass) can be added, so that measured horizontal components (*e.g.,* translational data or rotation data in the *x* or *y* axis) can be rotated with respect to a global reference. If an azimuth sensor is not provided, then the sensor device 100 can be oriented azimuthally to a predefined azimuth when the sensor device 100 is planted.

Also, control circuitry (not shown) can be included in the sensor device 100 to control the particle motion sensors. Additionally, an analog-to-digital converter and other components may be included, such as in the communication interface circuit 101, to convert signals measured by the particle motions sensors into digital form. The components in the sensor device 100 may be powered by a battery, a solar panel, or through a wired or wireless connection.

The bottom portion of the sensor device 100 may include a spike 112 for driving the sensor device 100 into the ground surface 120. The spike 112 has a generally sharp tip 113 that allows for easier insertion of the sensor device 100 into the ground surface 120 to form a connection between the earth and the sensor device 100. A user or machine can push the spike 112 into the ground surface 120 to cause at least a portion of the sensor device 100 to be buried in the earth beneath the ground surface 120. For example, the sensor device 100 can be driven into the ground surface using a hammer, either by a user or in an automated manner by a machine. In different examples, the sensor device 100 can be screwed into the ground by a wrench or planted in a prepared borehole with reduced disturbance of the surrounding earth. As another example, a borehole may be dug and the sensor device 100 may be placed therein. The borehole may be refilled after positioning the sensor device 100. Instead of using the spike 112, the housing 106 of the sensor device 100 can have a V or screw shape to facilitate planting into the ground surface 120 (protrusions can be formed on the outer wall of the housing 106 in the form of a helical screw).

In some cases, the sensor device 100 is partially buried beneath the ground surface 120, with a portion of the sensor device 100 protruding above the ground surface 120. In other cases, the sensor device 100 can be completely buried in the ground surface, up to a predetermined depth (as discussed above).

In some examples, the sensor components 102A and 102B are sensor chips. A sensor chip refers to an integrated circuit device that includes a substrate (*e.g.,* semiconductor substrate) on which particle motion sensors can be provided. For example, the particle motion sensors that can be provided in the sensor chip 102A or 102B can include MEMS particle motion sensors, such as MEMS accelerometers. A MEMS particle motion sensor can include a micro element (*e.g.,* a micro cantilever) that is moveable in response to particle motion, where the movement of the micro element can be detected by a sensing element. In other examples, the sensor components 102A and 102B can include other types of particle motion sensors. It should be noted that the MEMS particle motion sensors do not have to be on the "chip," but that is an option. An example of a MEMS and electronics configuration is disclosed in U.S. Patent Application Publication No. 2013/0315036.

In some implementations, the particle motion sensors that are provided in the sensor component 102A or 102B can measure translational data in multiple directions, such as the *x, y* and z directions. Examples of such arrangements are shown in Figs. 2A and 2B, where the sensor component 102A or 102B includes a respective z sensor 202A or 202B (for measuring translational data along the z axis), a respective x sensor 204A or 204B (for measuring translational data along the *x* axis), and a respective *y* sensor 206A or 206B (for measuring translational data along the *y* axis).

In further examples, such as shown in Fig. 2C, the sensor component 102A or 102B can include just a respective x sensor 204A or 204B and a respective *y* sensor 206A or 206B. In the arrangement of Fig. 2C, a separate *z* sensor 210 can be provided for measuring translational data along the *z* direction. The *z* sensor 210 can be positioned in the middle between sensor components 102A and 102B. In other examples, the *z* sensor 210 can be positioned elsewhere, such as in either 102A or 102B. In some implementations, a pair of sensors (*e.g.,* 204A and 204B, or 206A and 206B, or 202A and 202B) can be hardwired together to provide the sum and the difference as outputs. The sum can help reduce the non-correlated noise (between the elements of a pair) and the difference provides a gradient.

In other implementations, the sensor component 102A can include particle motion sensors to measure in just the *x* and *y* axes, while the sensor component 102B can include particle motion sensors to measure the *x*, *y* and z axes, and vice versa

Note that the particle motion sensors in a given component (*e.g.,* 102A) within the same sensor device 100 do not have to be orientated in the same direction as the other sensor component (*e.g.,* 102B). If the relative angle between the sensor components 102A and 102B is known, then the measured data by the pair of particle motion sensors can be corrected using vector rotation.

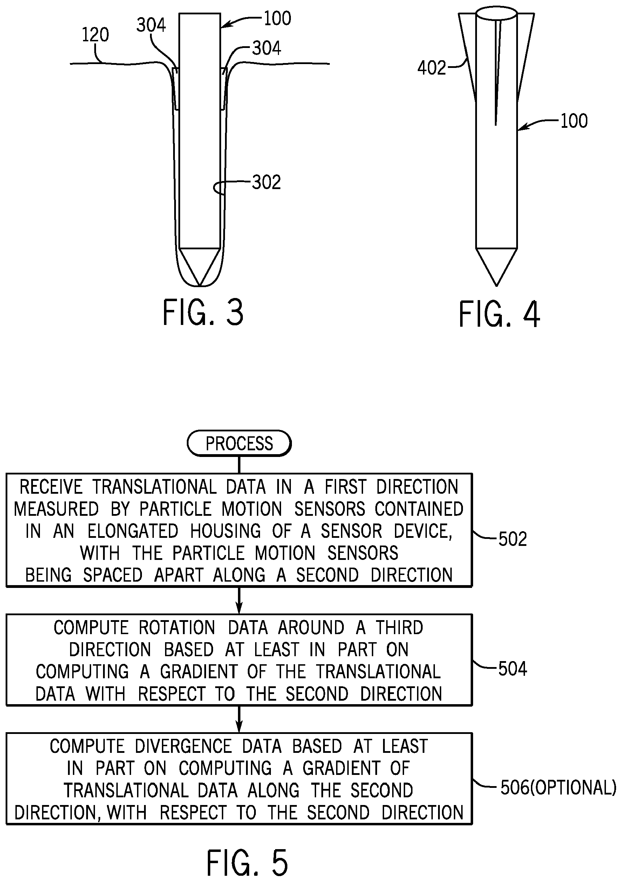

As shown in Fig. 3, a driving action on the sensor device 100 (*e.g.,* repeated hammer impacts on the sensor device 100) drives the sensor device 100 into a hole 302 extending from the ground surface 120. The driving action on the sensor device 100 may have caused the hole 302 to widen near the earth surface 302. The widening of the hole 302 near the earth surface 300 may cause resonances in the sensor device 100 that may be observed in measured seismic survey data. Such resonances can be reduced by enhancing the coupling of the sensor device 100 with the surrounding earth. This can be achieved by inserting wedges 304 into a gap between the sensor device 100 and the surrounding earth.

In other implementations, as shown in Fig. 4, the sensor device 100 can be provided with wings or fins 402 (*e.g.,* vertical fins), which allows the upper portion of the sensor device 100 to be coupled to the surrounding earth when the sensor device 100 is driven into the hole 302 (Fig. 3). In further implementations, a hole can be dug, the sensor device 100 is positioned in the hole, and the hole is backfilled to provide good coupling. In other implementations, a coupling device can first be planted or buried into the ground, and the sensor device 100 can then be engaged with the coupling device.

The rotation data in the three spatial axes (*k = x, y, z*) is given by:

$$R_k = \frac{1}{2}\left[\frac{\partial v_i}{\partial j} - \frac{\partial v_j}{\partial i}\right], \qquad \text{(Eq. 1)}$$

where $v_i$ represents the particle velocity along the $i(i = x, y, z)$ axis, and $v_j$ represents particle velocity along the $j(j = x, y, z)$ axis. In the foregoing nomenclature, the *i* axis is orthogonal with respect to the *j* axis, and both the *i* and *j* axes are orthogonal with respect to the *k* axis. The gradient $\frac{\partial v_i}{\partial j}$ represents a spatial derivative of $v_i$ with respect to the *j* axis, and the gradient $\frac{\partial v_j}{\partial i}$ represents a spatial derivative of $v_j$ with respect to the *i* axis. The particle velocity measurements can be made at or just under the ground surface 120 (Fig. 1). At or just under the ground surface 120, the following relationships for deriving rotation data along the x and *y* axis may apply:

$$R_y = -\frac{\partial v_z}{\partial x} = +\frac{\partial v_x}{\partial z}, \qquad \text{(Eq. 2)}$$

$$R_x = \frac{\partial v_z}{\partial y} = -\frac{\partial v_y}{\partial z}, \qquad \text{(Eq. 3)}$$

where $v_x$ represents particle velocity along the *x* direction, $v_y$ represents particle velocity along the *y* direction, and $v_z$ represents particle velocity along the *z* direction. This implies that the rotation components around a horizontal axis, $R_y$ or $R_x$, can be derived by measuring just one of the terms in the right hand side of Eq. 2 or 3.

Although reference is made to deriving rotation data based on measured velocities in the foregoing examples, it is noted that other types of translational data, including displacement or acceleration data, can be used for obtaining rotation data in a manner similar to that described in connection with Eqs. 2 and 3 above.

A characteristic of providing the sensor device 100 at the ground surface 120 (or free surface between the air and a solid or between the water and a solid) is that a spatial gradient and rotation become equivalent to one another, as expressed by Eq. 2 or 3.

By taking advantage of such characteristic when the sensor device is provided at the ground surface 120, measurements of the vertical gradient of horizontal translational data in a spike-shaped sensor device can be used to obtain the rotation data. A vertical gradient refers to a gradient taken with respect to the z axis. Horizontal translation data refers to translational data along the $x$ or $y$ axis. The vertical gradient of horizontal translational data can be expressed as $\frac{\delta v_x}{\delta z}$ or $\frac{\delta v_y}{\delta z}$, for example.

In the example arrangement of Fig. 1, the foregoing vertical gradients of horizontal translational data can be obtained using measurements of closely spaced apart $x$ sensors 204A and 204B, or closely spaced apart $y$ sensors 206A and 206B.

In addition to obtaining rotation data using measurements of translational data by particle motion sensors, divergence data can also be derived using the translational data, in accordance with further implementations.

The divergence of a wavefield, $\nabla \cdot V$, can be represented as:

$$\nabla \cdot V = \sum_{i=1}^{3} \frac{\partial v_i}{\partial i}. \qquad (Eq.\ 4)$$

In Eq. 4, $i = (x,\ y,\ z)$ represent the three orthogonal axes. At the free surface, Eq. 4 is expressed as:

$$\nabla \cdot V = \frac{2\mu}{\lambda + 2\mu}\left(\frac{\partial v_x}{\partial x} + \frac{\partial v_y}{\partial y}\right) = -\frac{2\mu}{\lambda}\left(\frac{\partial v_z}{\partial z}\right), \qquad (Eq.\ 5)$$

Eq. 5 indicates that, at the free surface, the divergence of a wavefield, can be measured by just one partial derivative term $\left(\frac{\partial v_z}{\partial z}\right)$. . In Eq. 5, the parameters $\mu$ and $\lambda$ are Lame parameters. The ratio of the Lame parameters $\mu$ and $\lambda$ is a function of the near-surface P- and S-wave velocities $\alpha$ and $\beta$:

$$\frac{\mu}{\lambda} = \frac{\beta^2}{\alpha^2 + \beta^2}. \qquad (Eq.\ 6)$$

The partial derivative in the right-hand side of Eqs. 2, 3, and 5 can be measured by differentiating measurements from closely spaced apart particle motion sensors, such as closely spaced apart particle motion sensors depicted in Fig. 1. In some examples, the particle motion sensors are spaced apart along the longitudinal axis 108 by a distance $D$ that is less than or equal to about 0.3 times a wavelength of a target signal for measurement by the sensor device 100. In further examples, the particle motion sensors are spaced apart along the longitudinal axis 108 by a distance $D$ that is less than or equal to about 0.1 times a wavelength of a target signal for measurement by the sensor device 100. Note that the foregoing distances $D$ between the particle motion sensors are applicable to computing the rotation data according to Eqs. 2 and 3 and/or the divergence data according to Eq. 5.

To achieve greater accuracy in computing rotation data and/or divergence data as discussed above based on measured translational data, the particle motion sensors are selected or configured such that the impulse responses of the particle motions sensors within the same sensor device 100 are similar to one other to within a specified threshold difference of one other. This may be achieved by selecting matching pairs of particle motion sensors, or by applying calibration coefficients to measurement data acquired by the particle motion sensors.

Fig. 5 is a flow diagram of a process according to some implementations. The process of Fig. 5 can be performed by a computer system that receives measurements made by one or more sensor devices 100. For example, the computer system may be coupled to the one or more sensor devices 100 over the communications medium 103.

The computer system receives (at 502) translational data in a first direction (*e.g., x* or *y* direction) measured by particle motion sensors contained in the elongated housing 106 (Fig. 1) of the sensor device 100. The particle motion sensors are spaced apart along a second, different direction (*e.g., z* direction) along the longitudinal axis 108 (Fig. 1) of the elongated housing 106.

The computer system computes (at 504) rotation data around a third direction (*e.g., y* or *x* direction) based at least in part on computing a gradient of the translational data with respect to the second direction, such as according to Eq. 2 or 3 set forth above.

In some examples, the computer system can also compute (at 506) divergence data based at least in part on computing a gradient of translational data along the second direction, with respect to the second direction, such as according to Eq. 5 above.

As shown in Fig. 2A or 2B, in some implementations, the sensor device 100 can include two sets (102A, 102B) of three orthogonally oriented particle motion sensors. This configuration allows computation of the two orthogonal rotation components, $R_x$ and $R_y$, around respective horizontal axes x and y. The particle motion sensors of the set may be positioned with a very small vertical separation inside the sensor device 100 (as discussed above). The separation between the sets of particle motion sensors may not have to be the same for different directions (*e.g.*, x and y direction), so long as the different separations are known.

Using the sensor device 100 of Fig. 2A or 2B, the following data can be obtained: translational data (including $v_x, v_y, v_z$), rotation data (including $R_x, R_y$), and divergence data ($\nabla \cdot V$). With the sensor device 100 of Fig. 2C, the same types of data can be obtained, except the divergence data. The foregoing data can be transmitted over the communications medium 103 (Fig. 1) to a station.

In some examples, to obtain more accurate estimates of the translational data, translational data measurements in a given direction obtained by a pair of particle motion sensors for the given direction can be aggregated (*e.g.,* summed, averaged, etc.,). For example, as shown in Fig. 2A or 2B, the translational data measurements by the z sensors 202A and 202B can be aggregated to obtain a better estimate of the wavefield in the z direction, where this estimate is centered at the same depth as the obtained rotation data and divergence. Similarly, the translational data measurements by the x sensors 204A and 204B can be aggregated (at a computer system) to obtain a better estimate of the wavefield in the x direction, and the translational data measurements by the y sensors 206A and 206B can be aggregated (at the computer system) to obtain a better estimate of the wavefield in the y direction.

In some examples, the separation (D in Fig. 1) between the sets of particle motion sensors in the sensor device is between one centimeter and one meter. More specifically, the separation, *D,* can be between 5 centimeters and 50 centimeters, although other ranges are possible, such as on the order of centimeters.

The amplitude of the difference signal (difference between the translational data acquired by a first particle motion sensor and the translational data acquired by a second particle motion sensor, computed for determining the partial derivative in Eq. 2, 3, or 5) may be relatively small compared to the raw particle motion sensor output, because of the relatively small distance between the two particle motion sensors. To allow for an accurate determination of the rotation data and/or divergence data according to some implementations, the particle motion sensors used in a pair should be well matched in terms of phase and amplitude frequency response. In some examples, MEMS particle motion sensors may be well suited for some implementations, since they have a zero (or close to zero) phase response, and their amplitude response is flat at different frequencies.

In addition, MEMS particle motion sensors may be able to measure gravity, which can be used to calibrate the sensitivities of the MEMS particle motion sensors. As a result, use of MEMS particle motion sensors may lead to more accurate computation of partial derivatives of translational data, such as those computed in Eq. 2, 3, or 5.

Use of MEMS particle motion sensors may also allow the sensor device 100 to have a reduced size, as compared to a sensor device that uses another type of particle motion sensors, such as geophones. A smaller sensor device 100 is easier to deploy.

To improve the accuracy of divergence data obtained by differentiating closely spaced z particle motion sensors, such as according to Eq. 5, the z particle motion sensors (*e.g.,* 202A and 202B in Fig. 2A or 2B) within the same sensor device 100 can be seismically decoupled. Seismically decoupling z particle motion sensors may be achieved by placing a damper between the two sensors, such as by placing a material, such as rubber or other dampening material, between the sensors that serve to attenuate the seismic signals that propagate in the longitudinal axis 108 (Fig. 1) of the sensor device 100. Also, to achieve improved accuracy in obtaining divergence data, the pair of z particle motion sensors in the sensor device 100 are matched or calibrated to have almost identical amplitude and phase responses.

As noted above, in some implementations, a sensor device 100 can include a sensing element (*e.g.,* a tilt meter) to measure a tilt of the sensor device 100 with respect to the z axis (vertical axis). A deviation from the vertical axis can be measured in two directions using tilt meters, or can be derived from the DC component for the particle motion sensor measurements. If the sensor device 100 is not oriented vertically (*i.e.,* its longitudinal axis 108 is tilted from the z axis by more than a predefined angle), then measurements by the particle motion sensors of the sensor device 100 are corrected for the tilt.

Moreover, the orientation of the horizontal (x or y) particle motions sensors with respect to geographical north (or any other horizontal azimuth) can be measured with a built in magnetometer or compass whose readings are recorded and transmitted once or multiple times during a survey. In other examples, the azimuth can be measured during or after planting of the sensor device 100, or derived from the measured translational data. The measured translation data from the horizontal particle motion sensors can be mathematically rotated using the measured azimuth angle.

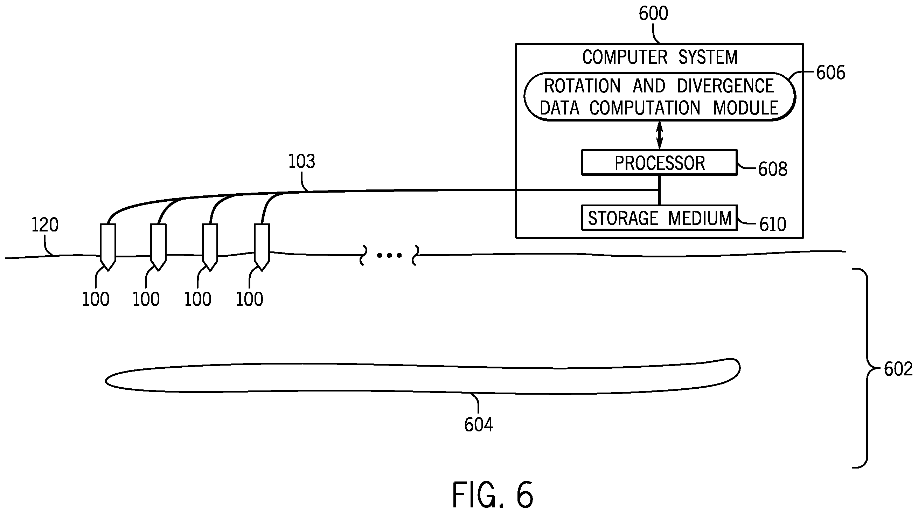

Fig. 6 is a schematic diagram of a land-based survey arrangement (including a seismic sensor system) that includes sensor devices 100 according to some implementations. In different examples, the sensor devices 100 can be deployed in a marine survey arrangement.

Measurements acquired by the sensor devices 100 are transmitted to a computer system 600, where the measurements are recorded (stored in a storage medium or storage media 610). In some examples, each sensor device 100 (or at least one of the sensor devices 100) can include the computer system 600, or at least one or more processors 608 and storage medium (or storage media) 610. The measurements are made by the sensor devices 100 in response to seismic waves produced by one or more seismic sources (not shown). The seismic waves are propagated into a subterranean structure 602, and reflected from a subterranean element 604 of interest. The reflected waves are detected by the sensor devices 100.

The computer system 600 includes a rotation and divergence data computation module 606, which can be implemented with machine-readable instructions that are executable on one or more processors 608. The rotation and divergence data computation module 606 can compute rotation data and divergence data as discussed above.

The processor(s) 608 can be coupled to the storage medium (or storage media) 610, which can store data, such as translational data received from the sensor devices 100.

The storage medium (or storage media) 610 can be implemented as one or more computer-readable or machine-readable storage media. The storage media include different forms of memory including semiconductor memory devices such as dynamic or static random access memories (DRAMs or SRAMs), erasable and programmable read-only memories (EPROMs), electrically erasable and programmable read-only memories (EEPROMs) and flash memories; magnetic disks such as fixed, floppy and removable disks; other magnetic media including tape; optical media such as compact disks (CDs) or digital video disks (DVDs); or other types of storage devices. Note that the instructions discussed above can be provided on one computer-readable or machine-readable storage medium, or can be provided on multiple computer-readable or machine-readable storage media distributed in a large system having possibly plural nodes. Such computer-readable or machine-readable storage medium or media is (are) considered to be part of an article (or article of manufacture). An article or article of manufacture can refer to any manufactured single component or multiple components. The storage medium or media can be located either in the machine running the machine-readable instructions, or located at a remote site from which machine-readable instructions can be downloaded over a network for execution.

## Claims

1. A method of seismic surveying, comprising:

   placing a seismic sensor system at least partially into an earth surface (120);
   actuating a seismic source to transmit impulses into an earth subsurface;
   receiving, by the seismic sensor system, translational data in a first direction measured by particle motion sensors (102A, 102B) contained in an elongated housing (106) of a seismic sensor device (100) provided at the earth surface, the particle motion sensors spaced apart along a second, different direction along a longitudinal axis (108) of the elongated housing, and receiving translational data in a third direction measured by additional particle motion sensors in the housing, the translational data in the first and third directions corresponding at least partially to the impulses; and
   recording the translational data in the first direction and the translational data in the third direction, wherein a gradient of the translational data in the first direction with respect to the second direction is useable to compute rotation data around the third direction, and wherein a gradient of the translational data in the third direction with respect to the second direction is useable to compute rotation data around the first direction.

2. The method of claim 1, further comprising:

   computing the rotation data around the third direction based at least in part on computing the gradient of the translational data in the first direction with respect to the second direction; and
   computing the rotation data around the first direction based at least in part on computing the gradient of the translational data in the third direction with respect to the second direction.

3. The method of claim 1, further comprising placing the seismic sensor device into the earth surface using automatic placement equipment to drive the seismic sensor device into the earth surface.

4. The method of claim 1, wherein the seismic sensor device is without any particle motion sensors spaced apart along any direction different from the second direction.

5. The method of claim 1, wherein the particle motion sensors are spaced apart along the second direction by a distance that is less than a wavelength of a target signal for measurement by the sensor device.

6. The method of claim 1, wherein the particle motion sensors are spaced apart along the second direction by a distance that is less than or equal to about 0.3 times a wavelength of a target signal for measurement by the sensor device.

7. The method of claim 1, wherein the particle motion sensors are spaced apart along the second direction by a distance that is less than or equal to about 0.1 times a wavelength of a target signal for measurement by the sensor device.

8. The method of claim 1, wherein the second direction is a vertical direction, and wherein the first and third directions are horizontal directions, the first direction being orthogonal with respect to the third direction.

9. The method of claim 1, further comprising:
computing divergence data based at least in part on computing a gradient of translational data in the second direction with respect to the second direction.

10. The method of claim I, wherein receiving the translational data comprises receiving the translational data measured by the particle motion sensors provided on integrated circuit chips in the sensor device.

11. The method of claim 10, wherein the particle motion sensors include microelectromechanical systems (MEMS) sensors.

12. The method of claim 1, wherein one of the particle motion sensors is located below the earth surface and another one of the particle motion sensors is located above the earth surface.

13. The method of claim 1, wherein the particle motion sensors are below the earth surface.

14. A seismic sensor device (100) comprising:

an elongated housing (106) provided at the earth surface, having a longitudinal axis;
particle motion sensors (102A, 102B) in the elongated housing to measure translational data in a first direction, the particle motion sensors spaced apart along a second, different direction along the longitudinal axis by a distance that is less than a wavelength of a target signal for measurement by the sensor device; and
a communication interface (101) to send the translational data to a system to compute rotation data about a third direction based at least in part on computing a gradient of the translational data with respect to the second direction.

15. The sensor device of claim 14, wherein the first direction is orthogonal with respect to the second direction, and the first and second directions are both orthogonal to the third direction.

16. An article comprising at least one machine-readable storage medium storing instructions that upon execution cause a system to:

receive translational data in a first direction measured by particle motion sensors (102A, 102B) contained in an elongated housing (106) of a sensor device (100) provided at an earth surface, the particle motion sensors spaced apart along a second, different direction along a longitudinal axis (108) of the elongated housing; and
compute (504) rotation data around a third direction based at least in part on computing a gradient of the translational data with respect to the second direction.

17. The article of claim 16, wherein the instructions upon execution cause the system to further:
correct the translational data for at least one of a tilt angle and an azimuth angle of the sensor device.

18. The article of claim 16, wherein the translational data is received from the particle motion sensors that are spaced apart along just the second direction, without being spaced apart in a different direction.

19. The article of claim 16, wherein the second direction is a vertical direction, and the first and third directions are horizontal directions.

**20.** The article of claim 16, wherein the particle motion sensors are spaced apart along the second direction by a distance that is less than or equal to about 0.3 times a wavelength of a target signal for measurement by the sensor device.

**21.** The article of claim 16, wherein the instructions upon execution cause the system to further:
compute divergence data based at least in part on computing a gradient of translational data in the second direction with respect to the second direction.

**22.** The article of claim 16, wherein the instructions upon execution cause the system to further:
using the rotation data and translational data, perform at least one selected from the group consisting of noise attenuation, wavefield interpolation, regularization, reconstruction, P- and S-wave separation, near-surface characterization, velocity estimation, sensor calibration, and seismic imaging.

**Patentansprüche**

**1.** Verfahren zur seismischen Vermessung, umfassend:

Platzieren eines seismischen Sensorsystems wenigstens teilweise in eine Erdoberfläche (120);
Betätigen einer seismischen Quelle, um Impulse in einen Erduntergrund zu übertragen;
Empfangen, durch das seismische Sensorsystem, von Translationsdaten in eine erste Richtung, die von Teilchenbewegungssensoren (102A, 102B), welche in einem langgestreckten Gehäuse (106) einer an der Erdoberfläche bereitgestellten seismischen Sensorvorrichtung (100) enthalten sind, gemessen werden, wobei die Teilchenbewegungssensoren entlang einer zweiten, anderen Richtung entlang einer Längsachse (108) des langgestreckten Gehäuses beabstandet sind, und Empfangen von Translationsdaten in eine dritte Richtung, die von zusätzlichen Teilchenbewegungssensoren im Gehäuse gemessen werden, wobei die Translationsdaten in die erste und dritte Richtung wenigstens teilweise den Impulsen entsprechen; und
Aufzeichnen der Translationsdaten in die erste Richtung und der Translationsdaten in die dritte Richtung, wobei ein Gradient der Translationsdaten in die erste Richtung in Bezug auf die zweite Richtung dazu nutzbar ist, Rotationsdaten um die dritte Richtung zu berechnen, und wobei ein Gradient der Translationsdaten in die dritte Richtung in Bezug auf die zweite Richtung dazu nutzbar ist, Rotationsdaten um die erste Richtung zu berechnen.

**2.** Verfahren nach Anspruch 1, ferner umfassend:

Berechnen der Rotationsdaten um die dritte Richtung basierend wenigstens teilweise auf dem Berechnen des Gradienten der Translationsdaten in die erste Richtung in Bezug auf die zweite Richtung; und
Berechnen der Rotationsdaten um die erste Richtung basierend wenigstens teilweise auf dem Berechnen des Gradienten der Translationsdaten in die dritte Richtung in Bezug auf die zweite Richtung.

**3.** Verfahren nach Anspruch 1, ferner umfassend Platzieren der seismischen Sensorvorrichtung in die Erdoberfläche unter Verwendung einer automatischen Platzierungseinrichtung, um die seismische Sensorvorrichtung in die Erdoberfläche zu treiben.

**4.** Verfahren nach Anspruch 1, wobei die seismische Sensorvorrichtung keine entlang einer von der zweiten Richtung verschiedenen Richtung beabstandeten Teilchenbewegungssensoren aufweist.

**5.** Verfahren nach Anspruch 1, wobei die Teilchenbewegungssensoren entlang der zweiten Richtung um einen Abstand beabstandet sind, der kleiner als eine Wellenlänge eines von der Sensorvorrichtung zu messenden Zielsignals ist.

**6.** Verfahren nach Anspruch 1, wobei die Teilchenbewegungssensoren entlang der zweiten Richtung um einen Abstand beabstandet sind, der kleiner oder gleich etwa dem 0,3-fachen einer Wellenlänge eines von der Sensorvorrichtung zu messenden Zielsignals ist.

**7.** Verfahren nach Anspruch 1, wobei die Teilchenbewegungssensoren entlang der zweiten Richtung um einen Abstand beabstandet sind, der kleiner oder gleich etwa dem 0,1-fachen einer Wellenlänge eines von der Sensorvorrichtung zu messenden Zielsignals ist.

**8.** Verfahren nach Anspruch 1, wobei die zweite Richtung eine vertikale Richtung ist und wobei die erste und dritte Richtung horizontale Richtungen sind, wobei die erste Richtung zur dritten Richtung orthogonal ist.

9. Verfahren nach Anspruch 1, ferner umfassend:
Berechnen von Divergenzdaten basierend wenigstens teilweise auf dem Berechnen eines Gradienten von Translationsdaten in die zweite Richtung in Bezug auf die zweite Richtung.

10. Verfahren nach Anspruch 1, wobei das Empfangen der Translationsdaten das Empfangen der von den auf integrierten Schaltkreischips in der Sensorvorrichtung bereitgestellten Teilchenbewegungssensoren gemessenen Translationsdaten umfasst.

11. Verfahren nach Anspruch 10, wobei die Teilchenbewegungssensoren Mikroelektromechaniksystem-(MEMS-)Sensoren umfassen.

12. Verfahren nach Anspruch 1, wobei sich einer der Teilchenbewegungssensoren unter der Erdoberfläche befindet und sich ein anderer der Teilchenbewegungssensoren über der Erdoberfläche befindet.

13. Verfahren nach Anspruch 1, wobei sich die Teilchenbewegungssensoren unter der Erdoberfläche befinden.

14. Seismische Sensorvorrichtung (100), umfassend:

ein an der Erdoberfläche bereitgestelltes langgestrecktes Gehäuse (106) mit einer Längsachse;
Teilchenbewegungssensoren (102A, 102B) im langgestreckten Gehäuse, um Translationsdaten in eine erste Richtung zu messen, wobei die Teilchenbewegungssensoren entlang einer zweiten, anderen Richtung entlang der Längsachse um einen Abstand beabstandet sind, der kleiner als eine Wellenlänge eines von der Sensorvorrichtung zu messenden Zielsignals ist; und
eine Kommunikationsschnittstelle (101), um die Translationsdaten an ein System zu senden, um Rotationsdaten um eine dritte Richtung basierend wenigstens teilweise auf der Berechnung eines Gradienten der Translationsdaten in Bezug auf die zweite Richtung zu berechnen.

15. Sensorvorrichtung nach Anspruch 14, wobei die erste Richtung zur zweiten Richtung orthogonal ist und die erste und die zweite Richtung beide zur dritten Richtung orthogonal sind.

16. Gegenstand, umfassend wenigstens ein maschinenlesbares Speichermedium, das Befehle speichert, die bei der Ausführung bewirken, dass ein System:

Translationsdaten in eine erste Richtung empfängt, die durch Teilchenbewegungssensoren (102A, 102B), welche in einem langgestreckten Gehäuse (106) einer an der Erdoberfläche bereitgestellten Sensorvorrichtung (100) enthalten sind, gemessen werden, wobei die Teilchenbewegungssensoren entlang einer zweiten, anderen Richtung entlang einer Längsachse (108) des langgestreckten Gehäuses beabstandet sind; und
Rotationsdaten um eine dritte Richtung basierend wenigstens teilweise auf dem Berechnen eines Gradienten der Translationsdaten in Bezug auf die zweite Richtung berechnet (504).

17. Gegenstand nach Anspruch 16, wobei die Befehle bei der Ausführung bewirken, dass das System ferner:
die Translationsdaten um wenigstens eines von einem Neigungswinkel und einem Azimutwinkel der Sensorvorrichtung bereinigt.

18. Gegenstand nach Anspruch 16, wobei die Translationsdaten aus den Teilchenbewegungssensoren empfangen werden, die nur entlang der zweiten Richtung beabstandet sind, ohne in einer anderen Richtung beabstandet zu sein.

19. Gegenstand nach Anspruch 16, wobei die zweite Richtung eine vertikale Richtung ist und die erste und dritte Richtung horizontale Richtungen sind.

20. Gegenstand nach Anspruch 16, wobei die Teilchenbewegungssensoren entlang der zweiten Richtung um einen Abstand beabstandet sind, der kleiner oder gleich etwa dem 0,3-fachen einer Wellenlänge eines von der Sensorvorrichtung zu messenden Zielsignals ist.

21. Gegenstand nach Anspruch 16, wobei die Befehle bei der Ausführung bewirken, dass das System ferner:
Divergenzdaten basierend wenigstens teilweise auf dem Berechnen eines Gradienten von Translationsdaten in die zweite Richtung in Bezug auf die zweite Richtung berechnet.

**22.** Gegenstand nach Anspruch 16, wobei die Befehle bei der Ausführung bewirken, dass das System ferner:
unter Verwendung der Rotationsdaten und Translationsdaten wenigstens eines ausgewählt aus der Gruppe bestehend aus Geräuschdämpfung, Wellenfeldinterpolation, Regularisierung, Rekonstruktion, P- und S-Wellenseparation, oberflächennahe Charakterisierung, Geschwindigkeitsschätzung, Sensorkalibrierung und seismische Abbildung ausführt.

**Revendications**

**1.** Un procédé de levé sismique, consistant à :

placer un système de capteurs sismiques au moins partiellement dans la surface terrestre (120) ;
activer une source sismique pour transmette les impulsions dans la subsurface terrestre ;
recevoir, par le système de capteurs sismiques, les données de translation dans une première direction, mesurées par les capteurs de mouvement de particules (102A, 102B) contenus dans un logement allongé (106) d'un dispositif capteur sismique (100) situé au niveau de la surface terrestre, les capteurs de mouvement de particules étant espacés le long d'une deuxième direction différente le long d'un axe longitudinal (108) du logement allongé et recevoir les données de translation dans une troisième direction, mesurée par des capteurs supplémentaires de mouvement de particules dans le logement, les données de translation dans les première et troisième directions correspondant au moins partiellement aux impulsions ; et
enregistrer les données de translation dans la première direction et les données de translation dans la troisième direction, où un gradient des données de translation dans la première direction par rapport à la deuxième direction peut servir à calculer les données de rotation autour de la troisième direction, et où un gradient des données de translation dans la troisième direction par rapport à la deuxième direction peut servir à calculer les données de rotation autour de la première direction.

**2.** Le procédé selon la revendication 1, consistant en outre à :

calculer les données de rotation autour de la troisième direction sur la base au moins en partie du calcul du gradient des données de translation dans la première direction par rapport à la deuxième direction ; et
calculer les données de rotation autour de la première direction sur la base au moins en partie du calcul du gradient des données de translation dans la troisième direction par rapport à la deuxième direction.

**3.** Le procédé selon la revendication 1, consistant en outre à placer le dispositif capteur sismique dans la surface terrestre au moyen d'équipement de placement automatique pour enfoncer le dispositif capteur sismique dans la surface terrestre.

**4.** Le procédé selon la revendication 1, dans lequel le dispositif capteur sismique est sans capteurs de mouvement de particules espacés le long de toute direction différente de la deuxième direction.

**5.** Le procédé selon la revendication 1, dans lequel les capteurs de mouvement de particules sont espacés le long de la deuxième direction d'une distance inférieure à la longueur d'onde d'un signal cible pour mesure par le dispositif capteur.

**6.** Le procédé selon la revendication 1, dans lequel les capteurs de mouvement de particules sont espacés le long de la deuxième direction d'une distance inférieure ou égale à environ 0,3 fois la longueur d'onde d'un signal cible pour mesure par le dispositif capteur.

**7.** Le procédé selon la revendication 1, dans lequel les capteurs de mouvement de particules sont espacés le long de la deuxième direction d'une distance inférieure ou égale à environ 0,1 fois la longueur d'onde d'un signal cible pour mesure par le dispositif capteur.

**8.** Le procédé selon la revendication 1, dans lequel la deuxième direction est une direction verticale et dans lequel les première et troisième directions sont des directions horizontales, la première direction étant perpendiculaire par rapport à la troisième direction.

**9.** Le procédé selon la revendication 1, consistant en outre à :
calculer les données de divergence sur la base au moins en partie du calcul du gradient des données de translation dans la deuxième direction par rapport à la deuxième direction.

10. Le procédé selon la revendication 1, dans lequel la réception des données de translation consiste à recevoir les données de translation mesurées par les capteurs de mouvement de particules situés sur les puces de circuit intégré dans le dispositif capteur.

11. Le procédé selon la revendication 1, dans lequel les capteurs de mouvement de particules comprennent des systèmes microélectromécaniques (MEMS).

12. Le procédé selon la revendication 1, dans lequel un des capteurs de mouvement de particules est situé en dessous de la surface terrestre et un autre capteur de mouvement de particules est situé au-dessus de la surface terrestre.

13. Le procédé selon la revendication 1, dans lequel les capteurs de mouvement de particules sont situés en dessous de la surface terrestre.

14. Un dispositif capteur sismique (100) comprenant :

un logement allongé (106) disposé au niveau de la surface terrestre, présentant un axe longitudinal ;
des capteurs de mouvement de particules (102A, 102B) dans le logement allongé pour mesurer les données de translation dans une première direction, les capteurs de mouvement de particules étant espacés le long d'une deuxième direction différente le long de l'axe longitudinal d'une distance qui est inférieure à une longueur d'onde d'un signal cible pour mesure par le dispositif ; et
une interface de communication (101) permettant d'envoyer les données de translation à un système pour calculer les données de rotation autour d'une troisième direction sur la base au moins en partie du calcul d'un gradient des données de translation par rapport à la deuxième direction.

15. Le dispositif capteur selon la revendication 14, dans lequel la première direction est perpendiculaire par rapport à la deuxième direction, et les première et deuxième direction sont toutes deux perpendiculaires à la troisième direction.

16. Un article comprenant au moins un support d'information lisible par ordinateur stockant des instructions qui, lors de leur exécution, permettent au système de :

recevoir des données de translation dans une première direction mesurées par des capteurs de mouvement des particules (102A, 102B), contenus dans un logement allongé (106) d'un dispositif capteur (100) disposé au niveau de la surface terrestre, les capteurs de mouvement des particules étant espacés le long d'une deuxième direction différente le long d'un axe longitudinal (108) du logement allongé ; et
calculer les données de rotation (504) autour d'une troisième direction sur la base au moins en partie du calcul du gradient des données de translation par rapport à la deuxième direction.

17. L'article selon la revendication 16, dans lequel les instructions, lors de leur exécution, permettent en outre au système de :
corriger les données de translation pour au moins un angle d'inclinaison et un angle d'azimut du dispositif capteur.

18. L'article selon la revendication 16, dans lequel les données de translation sont reçues des capteurs de mouvement de particules qui sont espacés le long de juste la deuxième direction, sans être espacés dans une direction différente.

19. L'article selon la revendication 16, dans lequel la deuxième direction est une direction verticale et les première et troisième directions are sont des directions horizontales.

20. L'article selon la revendication 16, dans lequel les capteurs de mouvement de particules sont espacés le long de la deuxième direction d'une distance inférieure ou égale à environ 0,3 fois la longueur d'onde d'un signal cible pour mesure par le dispositif capteur.

21. L'article selon la revendication 16, dans lequel les instructions, lors de leur exécution, permettent en outre au système de :
calculer les données de divergence sur la base au moins en partie du calcul du gradient des données de translation dans la deuxième direction par rapport à la deuxième direction.

**22.** L'article selon la revendication 16, dans lequel les instructions, lors de leur exécution, permettent en outre au système :
d'utiliser les données de rotation et les données de translation, d'exécuter au moins une des fonctions sélectionnées dans le groupe comprenant l'atténuation du bruit, l'interpolation du champ d'onde, la régularisation, la reconstruction, la séparation des ondes P et S, la caractérisation près de la surface, l'estimation de vitesse, l'étalonnage des capteurs et l'imagerie sismique.

FIG. 1

FIG. 2A

FIG. 2B

FIG. 2C

FIG. 3

FIG. 4

PROCESS

RECEIVE TRANSLATIONAL DATA IN A FIRST DIRECTION MEASURED BY PARTICLE MOTION SENSORS CONTAINED IN AN ELONGATED HOUSING OF A SENSOR DEVICE, WITH THE PARTICLE MOTION SENSORS BEING SPACED APART ALONG A SECOND DIRECTION — 502

COMPUTE ROTATION DATA AROUND A THIRD DIRECTION BASED AT LEAST IN PART ON COMPUTING A GRADIENT OF THE TRANSLATIONAL DATA WITH RESPECT TO THE SECOND DIRECTION — 504

COMPUTE DIVERGENCE DATA BASED AT LEAST IN PART ON COMPUTING A GRADIENT OF TRANSLATIONAL DATA ALONG THE SECOND DIRECTION, WITH RESPECT TO THE SECOND DIRECTION — 506(OPTIONAL)

FIG. 5

FIG. 6

**EP 2 951 618 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 20110042276
- US 20130315036 A

**Non-patent literature cited in the description**

- **NGUYEN DINH PHAM et al.** Investigation of Ground Rotational Motions Caused by Direct and Scattered P-Waves from the 4 March 2008 Taiger Explosion Experiment. *J. Seismol.*, 2012, 709-720

18